# FASCICULE DE BREVET EUROPEEN

(11) **EP 3 628 954 B1**
(45) Date de publication et mention de la délivrance du brevet: **12.01.2022**
(21) Numéro de dépôt: 19196636.5
(22) Date de dépôt: 11.09.2019
(51) Int. Cl.: F28D 1/03, F28D 1/053, F28D 20/02, F28D 21/00, F28D 20/00

(54) **ÉCHANGEUR DE CHALEUR À RÉSERVOIR DE MATÉRIAU À CHANGEMENT DE PHASE ET PROCÉDÉ DE FABRICATION ASSOCIÉ**
WÄRMETAUSCHER MIT EINEM BEHÄLTER FÜR PHASENWECHSELMATERIAL, UND ENTSPRECHENDES HERSTELLUNGSVERFAHREN
HEAT EXCHANGER WITH TANK OF PHASE-CHANGE MATERIAL AND ASSOCIATED MANUFACTURING METHOD

(43) Date de publication de la demande: 01.04.2020
(73) Titulaire: Valeo Systemes Thermiques-THS, 78322 Le Mesnil Saint Denis Cedex (FR)
(72) Inventeur: MOREAU, Sylvain, 72210 La Suze sur Sarthe (FR); BELLENFANT, Aurélie, 72210 La Suze sur Sarthe (FR); ROBILLON, Lionel, 72210 La Suze sur Sarthe (FR)
(74) Mandataire: Valeo Systèmes Thermiques

(56) Documents cités:
- EP-A1- 2 433 079
- EP-A1- 2 653 329
- DE-A1-102010 055 972
- DE-A1-102012 216 423
- FR-A1- 3 048 495
- JP-A- H09 113 171
- US-A1- 2014 165 647
- US-A1- 2014 374 074

## Description

La présente invention concerne les échangeurs de chaleur et plus précisément les échangeurs de chaleur comportant un matériau à changement de phase, notamment dans le domaine de la gestion thermique au sein d'un véhicule automobile. Un tel échangeur est connu de FR 3 048 495 divulguant le préambule de la revendication 1.

La présente invention concerne également un procédé de fabrication d'un tel échangeur de chaleur à matériau à changement de phase.

Dans les véhicules automobiles, il est connu de mettre en œuvre un dispositif de climatisation permettant de réguler la température de l'habitacle du véhicule.

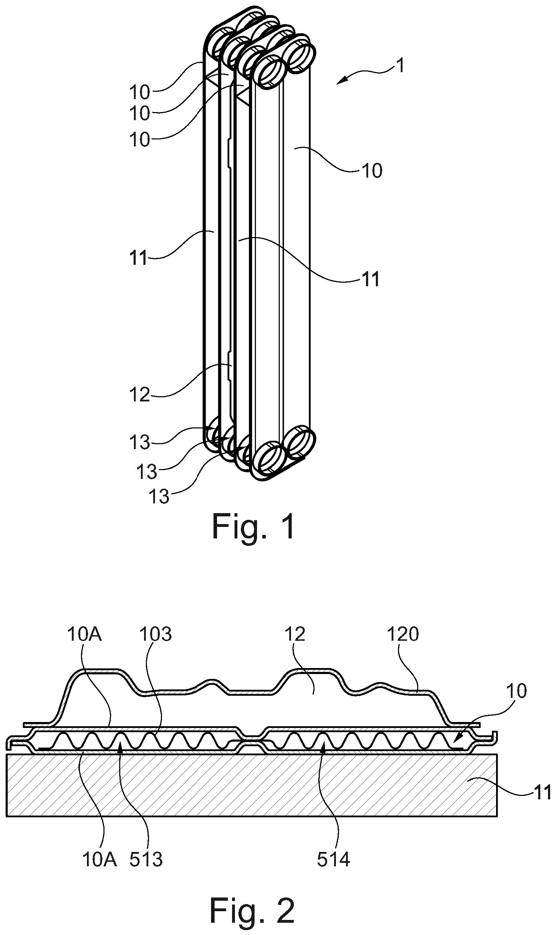

Plus précisément, ces dispositifs de climatisation mettent en œuvre un échangeur de chaleur, par exemple un évaporateur, tel que celui représenté à la figure 1.

Un tel échangeur de chaleur 1 comprend un faisceau de tubes 10 formé d'un empilement de tubes 10. Des intercalaires 11 sont généralement placés entre deux tubes 10 consécutifs. Ce faisceau de tubes 10 permet un échange de chaleur entre un premier fluide caloporteur circulant dans les tubes 10 et un deuxième fluide caloporteur, généralement un flux d'air passant entre les tubes (et plus précisément à travers les intercalaires).

Pour les véhicules munis d'un système d'arrêt automatique du moteur lors des arrêts courts du véhicule notamment, une fonction a été développée et permet, lorsque le moteur du véhicule est à l'arrêt et n'entraîne plus le compresseur de mise en circulation du fluide caloporteur, de maintenir le refroidissement de l'habitacle du véhicule, améliorant ainsi le confort des passagers du véhicule automobile.

Pour ce faire, l' échangeur de chaleur 1 met en œuvre un ou plusieurs réservoirs de matériau à changement de phase 12 aptes à stocker du froid lorsque le moteur du véhicule automobile est en marche pour ensuite le restituer au flux d'air traversant l' échangeur de chaleur 1 de sorte à le refroidir, pour une durée limitée, lorsque le moteur du véhicule est à l'arrêt.

Un échangeur de chaleur 1 de ce type, illustré partiellement sur la figure 2, comprend au moins une plaque réservoir 120 qui, après brasage avec une face externe d'un tube 10 du faisceau d'échange thermique, forme un réservoir 12 rempli de matériau à changement de phase.

On note que, de façon classique, le tube 10 est obtenu par brasage de deux plaques de tube 10A entre lesquelles est disposé un intercalaire interne 103 (figure 2).

Le réservoir 12 de matériau à changement de phase est ainsi en contact thermique avec une face externe du tube 10, le réservoir étant délimité par la plaque réservoir 120 et une surface opposée correspondant à une face externe du tube 10.

Chaque réservoir 12 de matériau à changement de phase comprend son propre tube de remplissage permettant d'injecter un matériau à changement de phase à l'intérieur du réservoir 12.

En règle générale, il est adjoint au réservoir 12 un organe de remplissage afin de permettre son remplissage en matériau à changement de phase. Cet organe de remplissage peut notamment être un conduit comportant un ou plusieurs orifices que l'on vient placer et fixer en regard d'ouvertures disposées sur la plaque réservoir 120. De tels organes de remplissage ne sont par forcement adaptés car ils représentent une pièce distincte qui a un coût de production et dont le placement peut être défaillant entraînant des difficultés pour le remplissage du réservoir.

Un des buts de la présente invention est de remédier au moins partiellement aux inconvénients de l'art antérieur et de proposer un échangeur de chaleur à matériau à changement de phase avec un organe de remplissage amélioré ainsi que son procédé de fabrication.

La présente invention concerne donc un échangeur de chaleur comportant un faisceau de tubes à l'intérieur desquels est destiné à circuler un premier fluide caloporteur et entre lesquels est destiné à circuler un deuxième fluide caloporteur, ledit faisceau de tubes comportant au moins un réservoir de matériau à changement de phase, ledit réservoir étant délimité par au moins une plaque réservoir comportant un organe de remplissage,

l'organe de remplissage comportant une surface externe emboutie venant de matière avec la plaque réservoir et repliée sur une surface interne venant également de matière avec ladite plaque réservoir de sorte à former un canal de remplissage, ladite surface interne comprenant au moins un orifice de remplissage débouchant dans ledit réservoir et ladite surface externe recouvrant ledit au moins un orifice de remplissage.

Cela permet une meilleure étanchéité de l'organe de remplissage et permet également de simplifier le procédé de fabrication en évitant l'adjonction d'un élément séparé en guise d'organe de remplissage. De plus il n'est plus nécessaire de mettre en correspondance l'au moins un orifice de remplissage avec un orifice particulier de l'organe de remplissage comme cela est le cas dans l'art antérieur.

Selon un aspect de l'invention, la plaque réservoir a une forme sensiblement rectangulaire comprenant deux grands côtés et deux petits côtés et la surface externe de l'organe de remplissage est repliée sur la surface interne autour d'un axe de pliage disposé sur un desdits petits côtés de la plaque réservoir.

Selon un autre aspect de l'invention, la surface externe de l'organe de remplissage est fixée sur la surface interne (140a) par brasage.

Selon un autre aspect de l'invention, le réservoir comporte un bossage et la surface externe un emboutissage, la hauteur de l'emboutissage de la surface externe étant inférieure ou égale à la hauteur dudit bossage.

Selon un autre aspect de l'invention, l'organe de remplissage comporte une zone de fermeture formée par une partie saillante latéralement de la surface externe et une partie saillante latéralement de la surface interne accolées l'une à l'autre de façon étanche.

Selon un autre aspect de l'invention, la plaque réservoir a une forme sensiblement rectangulaire comprenant deux grands côtés et deux petits côtés et la zone de fermeture est disposée sur un desdits grands côtés.

Selon un autre aspect de l'invention, la zone de fermeture s'étend sur une longueur d'au maximum dix millimètres.

La présente invention concerne également un procédé de fabrication d'un échangeur de chaleur comprenant un faisceau de tubes à l'intérieur desquels est destiné à circuler un premier fluide caloporteur et entre lesquels est destinés à circuler un deuxième fluide caloporteur, ledit faisceau comportant au moins un réservoir de matériau à changement de phase, ledit réservoir étant délimité par au moins une plaque réservoir, ladite plaque réservoir comprenant au moins un orifice de remplissage et un organe de remplissage,
ledit procédé comportant :
- une étape de fourniture d'une plaque réservoir comportant une zone de remplissage comportant :
   ∘ une surface interne comprenant au moins un orifice de remplissage du réservoir et une partie saillante latéralement de la plaque réservoir, et
   ∘ une surface externe emboutie et accolée à la surface interne, ladite surface externe comportant également une partie saillante latéralement,
   la partie saillante de la surface interne ou de la surface externe comportant une ouverture de remplissage,
- une étape de formation d'un organe de remplissage par repliement de la surface externe sur la surface interne de sorte à former un canal de remplissage reliant l'au moins un orifice de remplissage du réservoir et l'ouverture de remplissage,
- une étape de brasage de sorte à fixer l'une à l'autre la surface interne et la surface externe,
- une étape de remplissage du réservoir via l'ouverture de remplissage, le canal de remplissage et l'au moins un orifice de remplissage,
- une étape de fermeture du canal de remplissage de sorte à former une zone de fermeture disposée au niveau de la partie saillante entre l'ouverture de remplissage et l'au moins un orifice de remplissage, et
- une étape de découpe d'une portion de la partie saillante de l'organe de remplissage de sorte que seule la zone de fermeture fait saillie latéralement.

Selon un aspect du procédé selon l'invention, l'étape de fermeture du canal de remplissage est effectuée par soudure de la surface externe avec la surface interne.

Selon un autre aspect du procédé selon l'invention, la soudure est une soudure par ultrasons.

Selon un autre aspect du procédé selon l'invention, l'emplacement de la zone de fermeture est choisi de sorte qu'une fois ladite étape de découpe effectuée, la zone de fermeture s'étend sur une longueur d'au maximum dix millimètres.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un faisceau de tubes d'un échangeur à réservoir de matériau à changement de phase selon l'art antérieur,
- la figure 2 montre une représentation schématique en coupe d'un réservoir à matériau à changement de phase de la figure 1,
- la figure 3 montre une représentation schématique en perspective d'un échangeur de chaleur avant remplissage des réservoirs à changement de phase,
- la figure 4 montre une représentation schématique en coupe d'un réservoir à matériau à changement de phase de la figure 3,
- la figure 5 montre une représentation schématique en vue de dessus d'une plaque réservoir avant formation de l'organe de remplissage,
- la figure 6 montre une représentation schématique en vue de dessus d'une plaque réservoir après formation de l'organe de remplissage,
- la figure 7 montre une représentation schématique en perspective en transparence de la liaison entre une plaque réservoir et un tube au niveau de l'organe de remplissage,
- les figures 8 et 9 montrent des représentations schématiques en perspective d'une plaque réservoir lors de la fermeture de l'organe de remplissage,
- la figure 10 montre un organigramme des différentes étapes de fabrication d'un échangeur de chaleur selon l'invention.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

L'exemple de réalisation décrit ci-après est celui d'un échangeur de chaleur 1 destiné à être placé dans un dispositif de chauffage ventilation et climatisation en tant qu'évaporateur au sein d'un circuit de climatisation en tant qu'évaporateur. Cet évaporateur est notamment destiné à l'échange thermique entre un flux d'air et un fluide réfrigérant circulant dans le circuit de climatisation du véhicule automobile.

Il va de soi que l'invention couvre également un condenseur, un radiateur ou tout autre échangeur thermique, quel que soit le fluide caloporteur qui le traverse.

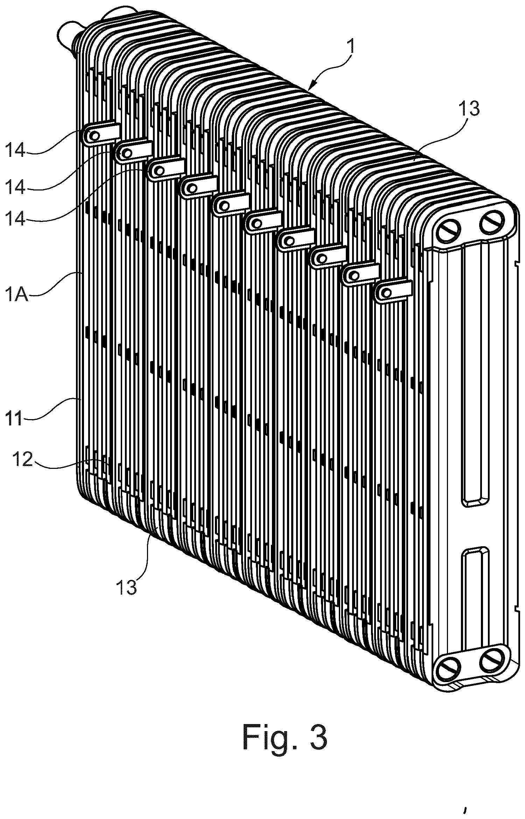

L'échangeur de chaleur 1 conforme à l'invention comprend classiquement un faisceau de tubes 10 formés d'un empilement en parallèle de tubes 10 et d'intercalaires 11 externes selon une direction d'empilement longitudinale (visibles sur la figure 3).

Au sein des tubes 10 est destiné à circuler un premier fluide caloporteur, notamment le fluide réfrigérant du circuit de climatisation dans le cas d'un évaporateur. Ce premier fluide caloporteur circule entre les extrémités 13 des tubes 10. Ces extrémités 13 peuvent former des collecteurs où boites à eau comme illustré sur la figure 3.

Les intercalaires 11, qui sont à persiennes ou non, sont placés entre deux tubes 10 consécutifs et permettent d'augmenter la surface d'échange thermique entre un deuxième fluide caloporteur, par exemple un flux d'air, passant entre les tubes 10 et le premier fluide fluide caloporteur circulant dans les tubes 10.

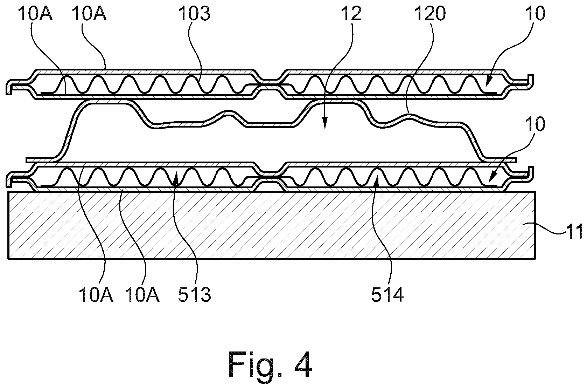

De façon connue et comme illustré par la figure 4, le tube 10 sur lequel est assemblée une plaque de réservoir 120 comprend deux plaques 10A qui sont embouties et brasées l'une à l'autre et entre lesquelles peut-être disposé un perturbateur interne 103 prenant la forme d'une tôle ondulée.

Plus précisément, les plaques 10A sont embouties et assemblées entre elles de façon étanche de sorte à former, après assemblage, deux conduits 513, 514 adjacents, à l'intérieur desquels circule le premier fluide caloporteur.

La plaque de réservoir 120 est accolée à un autre tube 10.

Dans ce mode de réalisation, le réservoir 12 est formé d'une part par une plaque de réservoir 120 et d'autre part par une surface opposée, qui est ici constituée par une face externe du tube 10 (en l'occurrence de la face externe de la plaque 10A).

Ainsi, le matériau à changement de phase stocké dans le réservoir 12 est en contact direct avec la face externe du tube 10, ce qui facilite et améliore les échanges thermiques entre le premier fluide caloporteur circulant dans le tube 10 et le matériau à changement de phase stocké dans le réservoir 12.

La plaque de réservoir 120 peut notamment présenter une pluralité de bossages qui sont distribués sur l'ensemble de sa surface (ces bossages sont également visibles sur les figures 4 à 9). Les bossages de la plaque de réservoir 120 accouplée à un premier tube 10 sont tangents ou affleurants à la face externe d'un deuxième tube 10 adjacent (non représenté). Des passages sont ainsi délimités à l'extérieur du réservoir 12 de matériau à changement de phase pour que le deuxième fluide caloporteur puisse circuler entre la plaque de réservoir 120 et la face externe du deuxième tube 10 adjacent du faisceau de tube10. Ceci permet d'optimiser les échanges thermiques entre le premier fluide caloporteur et le deuxième fluide caloporteur.

Comme le montre la figure 3, un ou plusieurs intercalaires 11 sont substitués par un réservoir 12 de matériau à changement de phase. Dans le cas d'un évaporateur, ce matériau à changement de phase est apte à stocker du froid lorsque le moteur du véhicule automobile est en marche pour ensuite le restituer, pour une durée limitée, à l'air traversant l'évaporateur lorsque le moteur du véhicule est l'arrêt.

L'échangeur de chaleur 1 illustré sur la figure 3 comprend plus particulièrement dix réservoirs 12 de matériau à changement de phase. Chaque réservoir 12 comporte un organe de remplissage 14 aplati prenant la forme d'un tube plat et faisant saille d'une face externe 1A du faisceau de tube 10. Ces organes de remplissage 14 peuvent notamment être alignés les uns par rapport aux autres comme le montre la figure 3.

En d'autres termes, le remplissage en matériau à changement de phase est réalisé à l'aide d'un organe de remplissage 14 propre à chaque réservoir 12 de matériau à changement de phase.

Les plaques de tube 10, les plaques de réservoir 120, les intercalaires extérieurs et les organes de remplissage 14 sont de préférence réalisés en métal, par exemple en alliage d'aluminium ou autre. Cela permet de les fixer les uns au autres lors d'une même étape de brasage.

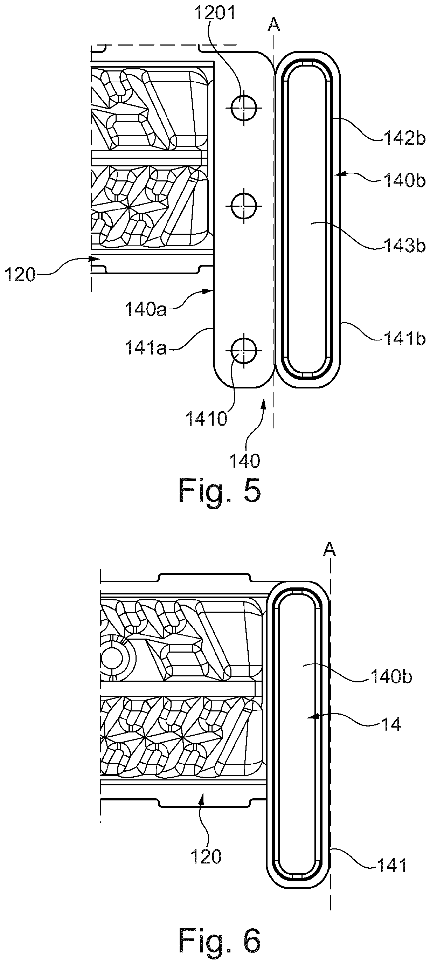

Les figures 5 à 9 montrent différentes étapes de la formation d'un organe de remplissage 14.

La figure 5 montre plus précisément une plaque réservoir 120 avant la formation de l'organe de remplissage 14. La plaque réservoir 120 comporte une zone de remplissage 140 comportant une surface interne 140a comprenant au moins un orifice de remplissage du réservoir 1201 et une partie saillante 141a latéralement de la plaque réservoir. Cet au moins un orifice de remplissage 1201 débouche dans le réservoir 12 afin de permettre le remplissage. Dans l'exemple illustré, la plaque réservoir 120 comporte deux orifices de remplissage 1201.

Par latéralement, on entend ici que la partie saillante 141a s'étend parallèlement au plan général défini par la plaque réservoir 120. De préférence, cette partie saillante latéralement 141a s'étend dans une direction latérale de sorte qu'elle dépasse d'une des faces externe du faisceau de tube 10 comme illustré sur la figure 3.

La zone de remplissage 140 comporte également une surface externe 140b emboutie et accolée à la surface interne 140b et destinée à la recouvrir. Cette surface externe 140b peut également comporter une partie saillante 141b destinée à venir recouvrir la partie saillante 141a de la surface interne 140a.

La zone de remplissage 140, et plus particulièrement les surface interne 140a et externe 140b, viennent ainsi de matière avec la plaque réservoir 12. Cette zone de remplissage 140 peut notamment être formée par emboutissage lors de la fabrication de ladite plaque réservoir 12 et notamment lors de formation du bossage.

Les zones interne 140a et externe 140b peuvent avoir une forme générale rectangulaire et être reliées l'une à l'autre par un de leurs grands côtés, comme illustré sur la figure 5. Il est cependant tout à fait possible d'imaginer un mode de réalisation particulier où les zones interne 140a et externe 140b sont être reliées l'une à l'autre par un de leur petit côté

La plaque réservoir 120 peut notamment avoir une forme sensiblement rectangulaire comprenant deux grands côtés et deux petits côtés. La zone de remplissage 140 peut notamment être réalisée sur une extrémité de la plaque réservoir 120 au niveau d'un de ses petits côtés. Comme illustré à la figure 5, la surface interne 140a et la surface externe 140b peuvent s'étendre perpendiculairement à l'axe longitudinale de la plaque réservoir 120 et leurs parties saillantes 141a, 141b dépasser d'un des grands côtés de la plaque réservoir 120.

Il est cependant tout à fait possible d'imaginer un mode de réalisation non représenté dans lequel la surface interne 140a et la surface externe 140b peuvent s'étendre parallèlement à l'axe longitudinale de la plaque réservoir 120 et leurs parties saillantes 141a, 140b peuvent dépasser d'un des petits côtés de la plaque réservoir 120.

Dans l'exemple présenté à la figure 5, la partie saillante 141a de la surface interne 140a comporte une ouverture de remplissage 1410. Selon une variante non représentée, cette ouverture de remplissage 1410 peut être réalisée sur la partie saillante 141b de la surface externe 140b.

Afin de former l'organe de remplissage 14, la surface externe 140b est repliée sur la surface interne 140a selon un axe de pliage A correspondant à la liaison entre ces deux surface. L'organe de remplissage 14 forme alors un canal de remplissage reliant l'au moins un orifice de remplissage 1201 du réservoir 12 et l'ouverture de remplissage 1410.

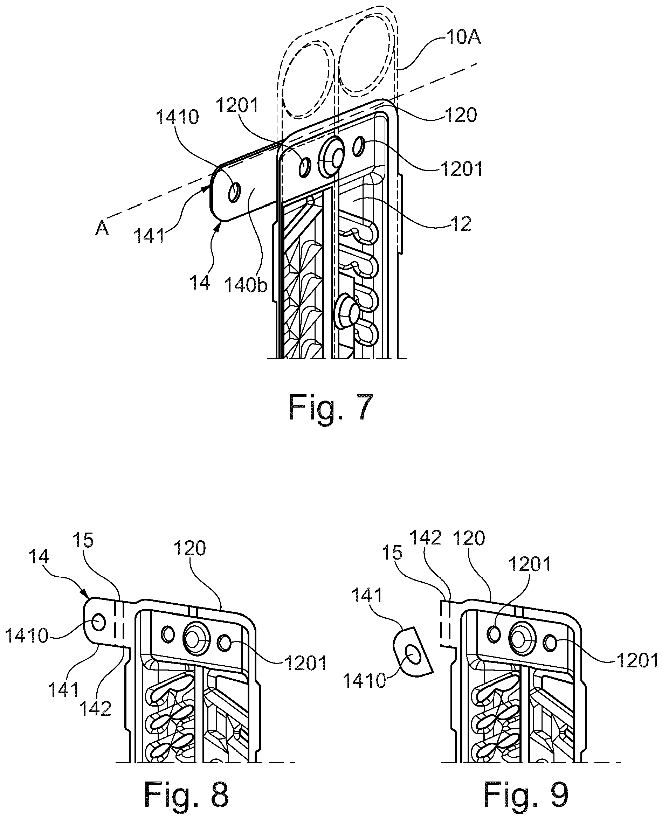

Le résultat de ce pliage est visible sur la figure 6 en vue de dessus et sur la figure 7 en vue arrière semi transparente. Sur cette figure 7 la partie illustrée du faisceau de tube 10 de l'échangeur de chaleur 1 comprend :
- une plaque 10A d'un tube 10 destiné à la circulation d'un fluide caloporteur ;
- une plaque réservoir 120 accolée à la face externe de la plaque 10A de façon étanche, de sorte à former le réservoir 12 de stockage d'un matériau à changement de phase.

La surface interne 140a et la surface externe 140b sont fixées l'une sur l'autre de façon étanche, par exemple par brasage. Pour cela, la surface externe 140b peut comporter un rebord 142b (visible sur la figure 5) venant se plaquer sur la surface interne 140a et au niveau duquel est réalisé la fixation. Le rebord 142b entoure complètement la surface externe 140b et délimite un emboutissage 143b en creux. La hauteur de l'emboutissage 143b de la surface externe 140b est de préférence inférieure ou égale à la hauteur du bossage de la plaque réservoir 120. Ainsi, lorsque la surface externe 140b recouvre la surface interne 140a, ladite surface externe 140b ne dépasse pas la hauteur du bossage de la plaque réservoir 120.

Ainsi, l'organe de remplissage 14 vient de matière avec la plaque réservoir 120. Cela permet une meilleure étanchéité de l'organe de remplissage et permet également de simplifier le procédé de fabrication en évitant l'adjonction d'un élément séparé en guise d'organe de remplissage. De plus il n'est plus nécessaire de mettre en correspondance l'au moins un orifice de remplissage 1201 avec un orifice particulier de l'organe de remplissage comme cela est le cas dans l'art antérieur.

L'organe de remplissage 14 comporte ainsi à ce stade une surface externe 140b repliée sur surface interne 140a, de sorte à former un canal de remplissage. La surface interne 140a comporte au moins un orifice de remplissage 1201. La surface externe 140b recouvre également ledit au moins un orifice de remplissage 1201. Dans l'exemple présenté aux figures 6 et 7, l'axe de pliage A est disposé sur un des petits côtés de la plaque réservoir 120.

L'organe de remplissage 14 comporte également une partie saillante 141 latéralement formée par les parties saillantes 141a, 141b des surfaces interne 140a et externe 140b.

Comme précédemment, on entend ici que la partie saillante 141 s'étend parallèlement au plan général défini par la plaque réservoir 120. De préférence, cette partie saillante 141 s'étend dans une direction latérale de sorte qu'elle dépasse d'une des faces externe du faisceau de tube 10 comme illustré sur la figure 3.

Selon l'orientation des surfaces interne 140a et externe 140b, l'organe de remplissage 14 peut s'étendre perpendiculairement ou parallèlement à l'axe longitudinal de la plaque réservoir 12. La partie saillante 141 peut quant à elle dépasser d'un des grands côtes ou d'un des petits côtés de la plaque réservoir 120.

Cette partie saillante 141 est destinée à être retirée après le remplissage du réservoir 12 comme le montrent les figures 8 et 9.

Comme le montre la figure 8, dans un première temps, une zone de fermeture 15 est réalisée sur la partie saillante 141 entre l'ouverture de remplissage 1410 et l'orifice de remplissage 1201. Cette zone de fermeture 15 peut notamment être réalisée par soudure de la surface interne 140a avec la surface externe 140b, par exemple par une soudure à ultrasons. Cette soudure est notamment réalisée après un écrasement afin de rapprocher les surfaces interne 140a et externe 140b.

Comme le montre la figure 9, dans un deuxième temps, la portion de la partie saillante 141 de l'organe de remplissage 14 est découpée de sorte que seule la zone de fermeture 15 fait saillie latéralement. De préférence, la partie en saillie comprenant la zone de fermeture 15 s'étend sur une longueur d'au maximum dix millimètres afin de ne pas dépasser excessivement du faisceau de tubes 10. Ce faible dépassement de l'organe de remplissage 14 facilite l'intégration de l'échangeur de chaleur 1 dans un boîtier d'un dispositif de chauffage, ventilation et climatisation.

La zone de fermeture 15 peut ainsi dépasser d'un des grands côtés ou d'un des petits côtés de la plaque réservoir 120 selon comment était orienté la partie saillante 141.

Dans une autre variante non représentée, le réservoir 12 de matériau à changement de phase n'est pas formé d'une plaque de réservoir 120 et d'une surface opposée constituée par une face externe d'un tube 10.

Dans cette variante, le réservoir 12 est formé d'une première plaque de réservoir 120 et d'une surface opposée, qui est ici constituée par une deuxième plaque de réservoir 120. Dans ce cas, la première plaque de réservoir 120 est en contact avec un premier tube 10 alors que la deuxième plaque de réservoir 120 est en contact avec un deuxième tube 10.

Les première et deuxième plaques de réservoir 120 sont essentiellement identiques en sont préférentiellement symétriques par rapport à leur plan de joint. La deuxième plaque de réservoir n'est toutefois pas solidarisée à un organe de remplissage 14 et ne comprend en conséquence pas d'orifice de remplissage 1201.

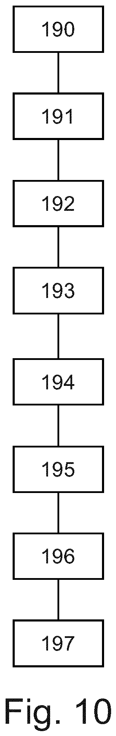

Le procédé de fabrication de l'échangeur de chaleur 1 à matériau à changement de phase peut ainsi comporter les étapes suivantes résumées dans l'organigramme de la figure 10.

La fabrication d'un évaporateur selon l'invention comprend bien évidemment une étape préalable 190 de recueil de l'ensemble des éléments le composant, notamment plaques de tube 10, perturbateur interne 103, intercalaires 11, premières et le cas échéant deuxièmes plaques de réservoir 120. Au moins une des plaques réservoir 120 comportant une zone de remplissage 140 telle que décrite plus haut dans la description.

L'organe de remplissage 14 est formé lors d'une étape 191 par repliement de la surface externe 140b sur la surface interne 140a de sorte à former un canal de remplissage reliant l'au moins un orifice de remplissage 1201 du réservoir 12 et l'ouverture de remplissage 1410.

On procède ensuite au pré-assemblage du faisceau de tube 10 de l'évaporateur 1 lors d'une étape 192.

Ce pré-assemblage consiste à empiler une pluralité de tubes 10 les uns contre les autres, chaque tube 10 étant constitué de l'empilement de deux plaques 10A avec le cas échéant interposition d'un intercalaire 11. Certains des espaces entre tubes 10 consécutifs sont comblés avec un intercalaire 11 ou avec une première plaque de réservoir 120 comportant un organe de remplissage 14 ou le cas échéant une première et une deuxième plaque de réservoir 120 accolées l'une à l'autre.

Cet ensemble est maintenu pré-assemblé au moyen d'un outillage prévu à cet effet qui permet de maintenir les différents composants de l'évaporateur 1 légèrement comprimés les uns contre les autres.

Cet ensemble pré-assemblé est ensuite introduit dans un four à l'intérieur duquel est mis en œuvre une étape 193 de brasage. Cette étape 193 de brasage permet la fixation des différents éléments formant le faisceau de tube 10 et permet également la fixation de la surface externe 140b sur la surface interne 140a afin de former l'organe de remplissage 14.

Le procédé comprend ensuite une étape 194 de remplissage du ou des réservoirs 12 de matériau à changement de phase.

Cette étape consiste à injecter, par exemple par tirage sous vide, un matériau à changement de phase à l'intérieur de chaque réservoir 12 via l'organe de remplissage 14 correspondant.

Ce matériau s'écoule dans chaque organe de remplissage 14 depuis son ouverture de remplissage 1410 et s'écoule dans le canal de remplissage, puis à travers les orifices de remplissage 1201 jusqu'à se répandre dans les réservoirs 12.

Chaque réservoir 12 est ensuite fermé lors d'une étape 195 par la mise en œuvre d'une zone de fermeture 15 au niveau de la partie en saillie 141 de l'organe de remplissage 14.

Cette zone de fermeture 15 permet l'obturation de l'organe de remplissage 14. Pour ce faire, les surface interne 140a et externe 140b sont solidarisées sur toute leur hauteur par soudure, notamment par soudure ultrasons. Toute autre technique connue de solidarisation peut être mise en œuvre.

Contrairement aux solutions d'étanchéité cylindrique de l'art antérieur, l'invention propose une solution d'étanchéité à plat qui diminue fortement les risques de fuite de matériau à changement de phase.

Le procédé peut également comprendre ensuite une étape 196 d'épreuve qui consiste à vérifier l'étanchéité de la zone de fermeture 15.

Cette étape 196 de vérification de l'étanchéité comprend une étape de mise en pression ou dépression de la partie de la chambre de remplissage située dans la première portion 141 d'extrémité via l'ouverture de remplissage 1410. Il est ainsi possible de garantir l'étanchéité de la fermeture du réservoir 12 de matériau à changement de phase après remplissage et obturation de l'organe de remplissage 14.

Le procédé comprend enfin une étape 197 de découpe de la partie saillante 141 de sorte qu'une fois ladite partie saillante 141 découpée, seule la zone de fermeture 15 fait saillie latéralement de la plaque réservoir 120.

On voit ainsi que le fait que l'organe de remplissage 14 vienne de matière avec la plaque réservoir 14 permet une meilleure étanchéité ainsi qu'un procédé de fabrication plus simple. Le fait également que le procédé de fabrication ne fait pas intervenir un élément de remplissage distinct qu'il faut placer à une position précise permet également de diminuer les risques d'erreurs lors du montage.

## Revendications

1. Échangeur de chaleur (1) comportant un faisceau de tubes (10) à l'intérieur desquels est destiné à circuler un premier fluide caloporteur et entre lesquels est destiné à circuler un deuxième fluide caloporteur, ledit faisceau de tubes (10) comportant au moins un réservoir (12) de matériau à changement de phase, ledit réservoir (12) étant délimité par au moins une plaque réservoir (120) comportant un organe de remplissage (14),
**caractérisé en ce que** l'organe de remplissage (14) comporte une surface externe (140b) emboutie venant de matière avec la plaque réservoir (120) et repliée sur une surface interne (140a) venant également de matière avec ladite plaque réservoir (120) de sorte à former un canal de remplissage, ladite surface interne (140a) comprenant au moins un orifice de remplissage (1201) débouchant dans ledit réservoir (12) et ladite surface externe (140b) recouvrant ledit au moins un orifice de remplissage (1201).

2. Échangeur de chaleur (1) selon la revendication 1, **caractérisé en ce que** la plaque réservoir (120) a une forme sensiblement rectangulaire comprenant deux grands côtés et deux petits côtés et que la surface externe (140b) de l'organe de remplissage (14) est repliée sur la surface interne (140a) autour d'un axe de pliage (A) disposé sur un desdits petits côtés de la plaque réservoir (120).

3. Échangeur de chaleur (1) selon l'une quelconque des revendications précédentes, **caractérisé en ce que** la surface externe (140b) de l'organe de remplissage (14) est fixée sur la surface interne (140a) par brasage.

4. Échangeur de chaleur (1) selon l'une quelconque des revendications précédentes, **caractérisé en ce que** le réservoir (12) comporte un bossage et la surface externe (140b) un emboutissage (143b), la hauteur de l'emboutissage (143b) de la surface externe (140b) étant inférieure ou égale à la hauteur dudit bossage.

5. Échangeur de chaleur (1) selon l'une quelconque des revendications précédentes, **caractérisé en ce que** l'organe de remplissage (14) comporte une zone de fermeture (15) formée par une partie saillante (141b) latéralement de la surface externe (140b) et une partie saillante (141a) latéralement de la surface interne (140a) accolées l'une à l'autre de façon étanche.

6. Échangeur de chaleur (1) selon la revendication précédente, **caractérisé en ce que** la plaque réservoir (120) a une forme sensiblement rectangulaire comprenant deux grands côtés et deux petits côtés et que la zone de fermeture (15) est disposée sur un desdits grands côtés.

7. Échangeur de chaleur (1) selon l'une quelconque des revendications 5 ou 6, **caractérisé en ce que** la zone de fermeture (15) s'étend sur une longueur d'au maximum dix millimètres.

8. Procédé de fabrication d'un échangeur de chaleur (1) comprenant un faisceau de tubes (10) à l'intérieur desquels est destiné à circuler un premier fluide caloporteur et entre lesquels est destinés à circuler un deuxième fluide caloporteur, ledit faisceau comportant au moins un réservoir (12) de matériau à changement de phase, ledit réservoir (12) étant délimité par au moins une plaque réservoir (120), ladite plaque réservoir (120) comprenant au moins un orifice de remplissage (1201) et un organe de remplissage (14),
ledit procédé comportant :
• une étape (190) de fourniture d'une plaque réservoir (120) comportant une zone de remplissage (140) comportant :
∘ une surface interne (140a) comprenant au moins un orifice de remplissage (1201) du réservoir (12) et une partie saillante (141a) latéralement de la plaque réservoir (120), et
∘ une surface externe (140b) emboutie et accolée à la surface interne (140a), ladite surface externe (140b) comportant également une partie saillante (141b) latéralement,
la partie saillante (141a, 141b) de la surface interne (140a) ou de la surface externe (140b) comportant une ouverture de remplissage (1410),
• une étape (191) de formation d'un organe de remplissage (14) par repliement de la surface externe (140b) sur la surface interne (140a) de sorte à former un canal de remplissage reliant l'au moins un orifice de remplissage (1201) du réservoir (12) et l'ouverture de remplissage (1410),
• une étape (193) de brasage de sorte à fixer l'une à l'autre la surface interne (140a) et la surface externe (140b),
• une étape (194) de remplissage du réservoir (12) via l'ouverture de remplissage (1410), le canal de remplissage et l'au moins un orifice de remplissage (1201),
• une étape (195) de fermeture du canal de remplissage de sorte à former une zone de fermeture (15) disposée au niveau de la partie saillante (141) entre l'ouverture de remplissage (1410) et l'au moins un orifice de remplissage (1201), et
• une étape (197) de découpe d'une portion de la partie saillante (141) de l'organe de remplissage (14) de sorte que seule la zone de fermeture (15) fait saillie latéralement.

9. Procédé selon la revendication 7, **caractérisé en ce que** l'étape (195) de fermeture du canal de remplissage est effectuée par soudure de la surface externe (140b) avec la surface interne (140a).

10. Procédé selon la revendication précédente, **caractérisé en ce que** la soudure est une soudure par ultrasons.

11. Procédé selon l'une quelconque des revendications 7 à 9, **caractérisé en ce que** l'emplacement de la zone de fermeture (15) est choisi de sorte qu'une fois ladite étape (197) de découpe effectuée, la zone de fermeture (15) s'étend sur une longueur d'au maximum dix millimètres.

## Patentansprüche

1. Wärmetauscher (1), welcher ein Bündel von Rohren (10) aufweist, wobei ein erstes Wärmeträgerfluid dazu bestimmt ist, in deren Innerem zu zirkulieren, und ein zweites Wärmeträgerfluid dazu bestimmt ist, zwischen ihnen zu zirkulieren, wobei das Rohrbündel (10) wenigstens einen Behälter (12) für Phasenwechselmaterial aufweist, wobei der Behälter (12) von wenigstens einer Behälterplatte (120) begrenzt wird, die ein Füllorgan (14) aufweist,
**dadurch gekennzeichnet, dass** das Füllorgan (14) eine ausgebauchte Außenfläche (140b) aufweist, die stoffschlüssig mit der Behälterplatte (120) verbunden ist und auf eine Innenfläche (140a) zurückgebogen ist, die ebenfalls stoffschlüssig mit der Behälterplatte (120) verbunden ist, so dass ein Füllkanal gebildet wird, wobei die Innenfläche (140a) wenigstens ein Füllloch (1201) aufweist, das in den Behälter (12) mündet, und wobei die Außenfläche (140b) das wenigstens eine Füllloch (1201) bedeckt.

2. Wärmetauscher (1) nach Anspruch 1, **dadurch gekennzeichnet, dass** die Behälterplatte (120) eine im Wesentlichen rechteckige Form aufweist, die zwei lange Seiten und zwei kurze Seiten umfasst, und dass die Außenfläche (140b) des Füllorgans (14) auf die Innenfläche (140a) um eine Biegeachse (A) zurückgebogen ist, die auf einer der kurzen Seiten der Behälterplatte (120) angeordnet ist.

3. Wärmetauscher (1) nach einem der vorhergehenden Ansprüche, **dadurch gekennzeichnet, dass** die Außenfläche (140b) des Füllorgans (14) auf der Innenfläche (140a) durch Hartlöten befestigt ist.

4. Wärmetauscher (1) nach einem der vorhergehenden Ansprüche, **dadurch gekennzeichnet, dass** der Behälter (12) eine Erhebung und die Außenfläche (140b) eine Ausbauchung (143b) aufweist, wobei die Höhe der Ausbauchung (143b) der Außenfläche (140b) kleiner oder gleich der Höhe der Erhebung ist.

5. Wärmetauscher (1) nach einem der vorhergehenden Ansprüche, **dadurch gekennzeichnet, dass** das Füllorgan (14) einen Schließbereich (15) aufweist, der von einem seitlich vorstehenden Teil (141b) der Außenfläche (140b) und einem seitlich vorstehenden Teil (141a) der Innenfläche (140a) gebildet wird, die dicht aneinandergefügt sind.

6. Wärmetauscher (1) nach dem vorhergehenden Anspruch, **dadurch gekennzeichnet, dass** die Behälterplatte (120) eine im Wesentlichen rechteckige Form aufweist, die zwei lange Seiten und zwei kurze Seiten umfasst, und dass der Schließbereich (15) an einer der langen Seiten angeordnet ist.

7. Wärmetauscher (1) nach einem der Ansprüche 5 oder 6, **dadurch gekennzeichnet, dass** sich der Schließbereich (15) über eine Länge von höchstens zehn Millimetern erstreckt.

8. Verfahren zur Herstellung eines Wärmetauschers (1), welcher ein Bündel von Rohren (10) aufweist, wobei ein erstes Wärmeträgerfluid dazu bestimmt ist, in deren Innerem zu zirkulieren, und ein zweites Wärmeträgerfluid dazu bestimmt ist, zwischen ihnen zu zirkulieren, wobei das Bündel wenigstens einen Behälter (12) für Phasenwechselmaterial aufweist, wobei der Behälter (12) von wenigstens einer Behälterplatte (120) begrenzt wird, wobei die Behälterplatte (120) wenigstens ein Füllloch (1201) und ein Füllorgan (14) umfasst,
wobei das Verfahren umfasst:
• einen Schritt (190) der Bereitstellung einer Behälterplatte (120), die einen Füllbereich (140) aufweist, welcher aufweist:
∘ eine Innenfläche (140a), die wenigstens ein Füllloch (1201) des Behälters (12) und einen von der Behälterplatte (120) seitlich vorstehenden Teil (141a) umfasst, und
∘ eine ausgebauchte und an die Innenfläche (140a) angefügte Außenfläche (140b), wobei die Außenfläche (140b) ebenfalls einen seitlich vorstehenden Teil (141b) umfasst,
wobei der vorstehende Teil (141a, 141b) der Innenfläche (140a) oder der Außenfläche (140b) eine Füllöffnung (1410) aufweist,
• einen Schritt (191) der Ausbildung eines Füllorgans (14) durch Zurückbiegen der Außenfläche (140b) auf die Innenfläche (140a), um einen Füllkanal zu bilden, der das wenigstens eine Füllloch (1201) des Behälters (12) und die Füllöffnung (1410) verbindet,
• einen Schritt (193) des Hartlötens, um die Innenfläche (140a) und die Außenfläche (140b) aneinander zu befestigen,
• einen Schritt (194) des Füllens des Behälters (12) über die Füllöffnung (1410), den Füllkanal und das wenigstens eine Füllloch (1201),
• einen Schritt (195) des Schließens des Füllkanals, um einen Schließbereich (15) zu bilden, der an dem vorstehenden Teil (141) zwischen der Füllöffnung (1410) und dem wenigstens einen Füllloch (1201) angeordnet ist, und
• einen Schritt (197) des Abschneidens eines Abschnitts des vorstehenden Teils (141) des Füllorgans (14), so dass allein der Schließbereich (15) seitlich vorsteht.

9. Verfahren nach Anspruch 7, **dadurch gekennzeichnet, dass** der Schritt (195) des Schließens des Füllkanals durch Zusammenschweißen der Außenfläche (140b) mit der Innenfläche (140a) durchgeführt wird.

10. Verfahren nach dem vorhergehenden Anspruch, **dadurch gekennzeichnet, dass** das Schweißen ein Ultraschallschweißen ist.

11. Verfahren nach einem der Ansprüche 7 bis 9, **dadurch gekennzeichnet, dass** der Ort des Schließbereichs (15) so gewählt wird, dass, nachdem der Schritt (197) des Abschneidens durchgeführt worden ist, der Schließbereich (15) sich über eine Länge von höchstens zehn Millimetern erstreckt.

## Claims

1. Heat exchanger (1) having a bundle of tubes (10) inside which a first heat transfer fluid is intended to circulate and between which a second heat transfer fluid is intended to circulate, said bundle of tubes (10) having at least one reservoir (12) of phase change material, said reservoir (12) being delimited by at least one reservoir plate (120) having a filling member (14), **characterized in that** the filling member (14) has a stamped external surface (140b) that is integral with the reservoir plate (120) and folded over an internal surface (140a) that is also integral with said reservoir plate (120) so as to form a filling channel, said internal surface (140a) comprising at least one filling orifice (1201) that opens into said reservoir (12) and said external surface (140b) covering said at least one filling orifice (1201).

2. Heat exchanger (1) according to Claim 1, **characterized in that** the reservoir plate (120) has a substantially rectangular shape comprising two long sides and two short sides and **in that** the external surface (140b) of the filling member (14) is folded over the internal surface (140a) about a folding axis (A) disposed on one of said short sides of the reservoir plate (120).

3. Heat exchanger (1) according to either one of the preceding claims, **characterized in that** the external surface (140b) of the filling member (14) is fastened to the internal surface (140a) by brazing.

4. Heat exchanger (1) according to any one of the preceding claims, **characterized in that** the reservoir (12) has a boss and the external surface (140b) a stamped portion (143b), the height of the stamped portion (143b) of the external surface (140b) being less than or equal to the height of said boss.

5. Heat exchanger (1) according to any one of the preceding claims, **characterized in that** the filling member (14) has a closure zone (15) formed by a laterally protruding part (141b) of the external surface (140b) and a laterally protruding part (141a) of the internal surface (140a) that adjoin one another in a sealed manner.

6. Heat exchanger (1) according to the preceding claim, **characterized in that** the reservoir plate (120) has a substantially rectangular shape comprising two long sides and two short sides and **in that** the closure zone (15) is disposed on one of said long sides.

7. Heat exchanger (1) according to either one of Claims 5 and 6, **characterized in that** the closure zone (15) extends over a length of at most ten millimetres.

8. Method for manufacturing a heat exchanger (1) comprising a bundle of tubes (10) inside which a first heat transfer fluid is intended to circulate and between which a second heat transfer fluid is intended to circulate, said bundle having at least one reservoir (12) of phase change material, said reservoir (12) being delimited by at least one reservoir plate (120), said reservoir plate (120) comprising at least one filling orifice (1201) and a filling member (14),
said method involving:
• a step (190) of providing a reservoir plate (120) having a filling zone (140) having:
o an internal surface (140a) comprising at least one filling orifice (1201) of the reservoir (12) and a laterally protruding part (141a) of the reservoir plate (120), and
∘ a stamped external surface (140b) adjoining the internal surface (140a), said external surface (140b) also having a laterally protruding part (141b),
the protruding part (141a, 141b) of the internal surface (140a) or of the external surface (140b) having a filling opening (1410),
• a step (191) of forming a filling member (14) by folding the external surface (140b) over the internal surface (140a) so as to form a filling channel connecting the at least one filling orifice (1201) of the reservoir (12) and the filling opening (1410),
• a step (193) of brazing so as to fasten the internal surface (140a) and the external surface (140b) to one another,
• a step (194) of filling the reservoir (12) via the filling opening (1410), the filling channel and the at least one filling orifice (1201),
• a step (195) of closing the filling channel so as to form a closure zone (15) disposed at the protruding part (141), between the filling opening (1410) and the at least one filling orifice (1201), and
• a step (197) of cutting a portion of the protruding part (141) of the filling member (14) such that only the closure zone (15) protrudes laterally.

9. Method according to Claim 7, **characterized in that** the step (195) of closing the filling channel is carried out by welding the external surface (140b) to the internal surface (140a).

10. Method according to the preceding claim, **characterized in that** the welding is ultrasonic welding.

11. Method according to any one of Claims 7 to 9, **characterized in that** the location of the closure zone (15) is chosen such that once said cutting step (197) has been carried out, the closure zone (15) extends over a length of at most ten millimetres.
